# FASCICULE DE BREVET EUROPEEN

(11) **EP 2 127 972 B1**
(45) Date de publication et mention de la délivrance du brevet: **24.08.2011**
(21) Numéro de dépôt: 09155523.5
(22) Date de dépôt: 18.03.2009
(51) Int. Cl.: B60T 7/04, B60T 13/58, B60T 13/57

(54) **Système de commande avec simulateur pour système de freinage hydraulique**
Steuersystem mit Simulator für hydraulisches Bremssystem
Control system with simulator for hydraulic braking system

(30) Priorité: 21.05.2008 FR 0802839
(43) Date de publication de la demande: 02.12.2009
(73) Titulaire: Robert Bosch GmbH, 70442 Stuttgart (DE)
(72) Inventeur: Sprocq, Raynald, 77450 Esbly (FR); Anderson, Chris, 75002 Paris (FR)
(74) Mandataire: Hurwic, Aleksander Wiktor

(56) Documents cités:
- WO-A-2004/005095
- WO-A-2007/080106
- FR-A- 2 772 706

## Description

L'invention concerne un système de simulation de sensation de freinage à la pédale de frein. Elle est plus particulièrement applicable à un véhicule équipé d'un système de freinage classique dans lequel la pédale de frein agit sur le circuit de freinage hydraulique des roues du véhicule et d'un système de freinage à énergie auxiliaire tel qu'un système de freinage électrique. Elle est donc notamment applicable aux véhicules à traction hybride tels que les véhicules à traction mixte comportant un moteur à combustion interne et un ou plusieurs moteurs électriques. Elle est également applicable à un véhicule équipé d'un système de freinage automatique.

La mise en oeuvre de simulateur de sensation de freinage est connue de WO 2007/080106, FR 2 772 706 et WO 2004/005095.

Il est connu dans la technique d'équiper des véhicules à l'aide de deux systèmes de freinage commandés par le même dispositif de commande (pédale de frein), et agissant sur les roues du véhicule à l'aide de sources d'énergies différentes.

Les véhicules possédant deux systèmes de freinage sont, par exemple, des véhicules hybrides à traction mixte possédant un moteur de traction à combustion interne et des moteurs de tractions électriques. Dans ces véhicules, il est connu d'utiliser les moteurs électriques pour le freinage en les faisant fonctionner en génératrices électriques, le freinage se faisant alors par récupération d'énergie.

Le véhicule comporte donc un système de freinage électrique par récupération d'énergie mais il comporte aussi généralement un système de freinage hydraulique classique en raison du fait que l'effort de freinage du système de freinage électrique est limité et qu'à vitesse réduite, il devient très faible.

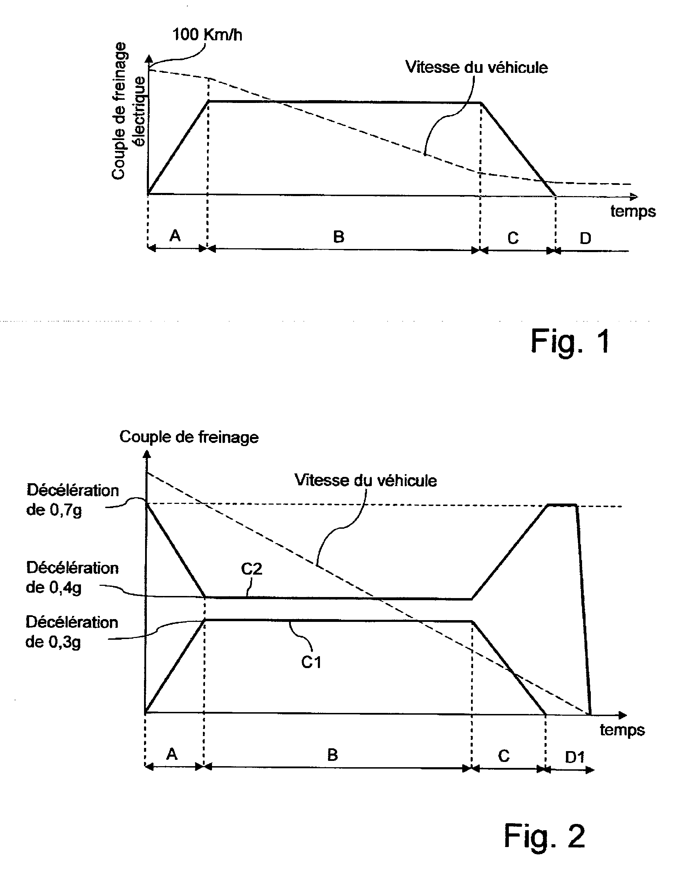

La figure 1 représente de manière schématique, en trait continu, une courbe de freinage (couple de freinage en fonction du temps) d'un tel système de freinage électrique seul. Sur ce même graphique, on a représenté en pointillés la vitesse du véhicule. Dans une première zone de freinage A, le freinage augmente progressivement jusqu'à atteindre sa pleine efficacité dans une deuxième zone de freinage B. Puis, lorsque la vitesse du véhicule devient faible, dans une troisième zone C, le couple de freinage diminue. Il devient quasi inexistant dans une quatrième zone D. Un tel système de freinage est imparfait parce que dans la zone A le freinage ne devient pas pleinement efficace rapidement et parce que dans les zones C et D le freinage diminue lorsque le véhicule est à faible vitesse. De plus, la valeur maximale du couple de freinage électrique est typiquement inférieure à celle qu'il est possible d'obtenir avec un système de freinage hydraulique.

Pour remédier à cet inconvénient du freinage électrique par récupération d'énergie, on doit prévoir qu'un système de freinage hydraulique vienne apporter un complément de freinage dans les zones A, B, C et/ou D.

La figure 2 représente des courbes de fonctionnement du système de freinage électrique et du système de freinage hydraulique.

La courbe C1 est la courbe de freinage électrique par récupération d'énergie qui correspond à celle de la figure 1. Si l'on désire obtenir une décélération du véhicule de 0,7g par exemple, et que le système de freinage électrique permet d'obtenir une décélération maximale de 0,3g, il faudra que la courbe du freinage appliquée par le système de freinage hydraulique soit schématiquement celle représentée par la courbe C2. Dans la zone A, le couple de freinage hydraulique permettra dès que possible une décélération de 0,7g puis diminuera jusqu'à ce que le couple de freinage électrique atteigne sa valeur maximale et que la décélération équivalente due à ce couple de freinage électrique soit de 0,3g. De cette façon, à chaque instant, la somme des couples fournis par les systèmes de freinage électrique et hydraulique fournit une décélération de 0,7g. Dans la zone B, le système de freinage hydraulique complète le système de freinage électrique pour obtenir également une décélération de 0,7g. Ensuite, dans la zone C, on a une augmentation du couple de freinage du système hydraulique pour apporter à nouveau un complément de freinage au système de freinage électrique et pour, dans la zone D1, pallier la quasi inexistence de couple de freinage électrique.

Par ailleurs, outre les temps de réponse du système de freinage électrique par récupération, ce système peut ne pas répondre tout le temps de la même façon en raison de la charge du circuit de récupération d'énergie qui peut varier. C'est le cas notamment dans le cas où le circuit de récupération comporte essentiellement les batteries du véhicule. Dans ce cas la charge peut varier en fonction de l'état des batteries.

Dans de tels systèmes un circuit de commande, un calculateur par exemple, doit gérer les fonctionnements des systèmes de freinage. Ce calculateur est sollicité à chaque freinage.

De façon générale, l'invention est donc applicable à une installation de freinage pour véhicule comportant un système de freinage de service à énergie auxiliaire et un système de freinage à énergie musculaire de type classique qui est alors utilisé en freinage de secours.

Un organe de commande tel qu'une pédale de frein actionne le système de freinage de service ou, en cas d'insuffisance ou de défaillance de ce dernier, le freinage de secours.

Le système de freinage de secours de type classique comporte un maître-cylindre équipé d'au moins un piston primaire et est commandé par l'organe de commande manuelle (pédale de frein).

Par ailleurs, une valve de sécurité au moins permet d'isoler le maître-cylindre du système de freinage classique à partir des freins de roues lorsque le freinage de service fonctionne normalement. Par contre lorsque l'effort de freinage fourni par le système de freinage de service (freinage à énergie auxiliaire, par exemple énergie électrique) est insuffisant ou lorsque ce système de freinage est défaillant, cette valve de sécurité permet de coupler le maître-cylindre aux freins de roues.

Dans de tels systèmes, pour que le conducteur ait une sensation de freinage lorsque le système de freinage de service fonctionne, on prévoit un simulateur de sensation de freinage pour opposer à l'avance de l'organe de commande manuelle (pédale de frein), lors d'un freinage de service à énergie auxiliaire, une réaction reflétant le déroulement du freinage.

Couramment, ce simulateur comprend un piston de simulateur qui coulisse dans une chambre. Ce piston est sollicité d'un côté par l'organe de commande ou pédale de frein (directement ou indirectement) et d'un autre côté par un moyen d'application d'une force qui simule l'effort de freinage.

Lors du fonctionnement du système de freinage à énergie auxiliaire, le maître-cylindre est donc isolé des freins de roues et le liquide contenu dans le maître-cylindre ne peut alimenter ces freins. Grâce au simulateur de sensation, l'organe de commande manuelle reçoit un effort qui s'oppose à l'actionnement de l'organe de commande manuelle et qui simule l'effort de freinage. En principe, ce système de simulation permet de créer une loi de variation de la force à exercer sur l'organe de commande manuelle en fonction de la course. Cela procure au conducteur une sensation semblable à celle qui serait obtenue si la pression de liquide dans les freins de roues résultait directement de la pression provenant du maître-cylindre et de l'effort musculaire sur la pédale de frein.

Comme on l'a mentionné précédemment, l'invention est également applicable à un système de freinage automatique commandé par exemple par un système de détection tel qu'un radar placé à l'avant du véhicule. Ce système agit par exemple à l'aide d'un système de contrôle dynamique de trajectoire ESP (Electronic Stablity Program en terminologie anglo-saxonne).

Dans les systèmes de simulation connus, la loi de variation de la force à exercer sur l'organe de commande (la pédale de frein) est déterminée principalement par un moyen de rappel élastique, généralement formé par un ressort. En cas d'incident, tel qu'une défaillance de la source basse pression (pompe à vide) qui est destinée à faire le vide dans la chambre basse pression du servomoteur d'assistance au freinage, ou en cas défaillance du servomoteur d'assistance au freinage, l'organe de commande (pédale de frein) doit agir sur le maître cylindre de frein sans intervention du servomoteur d'assistance au freinage. Le conducteur doit donc exercer un effort relativement important par rapport à l'effort exercé lors d'un freinage aidé par le servomoteur d'assistance au freinage. A cet effort s'ajoute l'effort absorbé par le simulateur. Il convient alors de mettre hors service le simulateur.

Dans le cas où le simulateur est commandé par une chambre de pression formant une structure indépendante et qui reçoit les ordres de cette structure par une canalisation, la solution peut être de prévoir une vanne de blocage sur cette canalisation. Mais dans le cas où la chambre de pression de commande est intégrée au simulateur, cette chambre de pression est connectée directement au simulateur et il n'y a pas de valve de blocage entre la chambre de pression et le simulateur. On trouvera un exemple de réalisation d'un tel simulateur dans la demande de brevet FR 2772706.

Par ailleurs, la demande de brevet WO2004005095 propose une approche dite "booster actif" afin de résoudre les problèmes de confort pédale liés à la gestion de la répartition de couple de freinage classique/'régénératif' sur les véhicules hybrides.

En freinage normal, la tige de commande du servofrein est découplée de la pédale en raison d'un jeu physique au niveau de la liaison pédale/tige de commande, ou à l'intérieur du servofrein. La caractéristique pédale course/effort est artificiellement reproduite par un simulateur accroché en parallèle à la pédale. A partir de la demande conducteur détectée à travers un capteur de position de la pédale de frein, le système peut faire intervenir et doser la répartition des deux sources de couple de freinage afin d'optimiser la recharge des accus d'alimentation du moteur électrique du véhicule. Le découplage au niveau de la tige de commande évite des perturbations de la sensation pédale liées aux changements de position du corps de piston servofrein alors que le système modifie la répartition relative des deux sources de freinage afin d'obtenir la décélération totale voulue.

En situation de freinage lors d'une défaillance de vide ou de panne électrique, le jeu au niveau de la tige de commande / pédale se referme, et l'effort conducteur est alors transmis au servofrein de manière classique afin de générer une montée en pression dans le maître-cylindre.

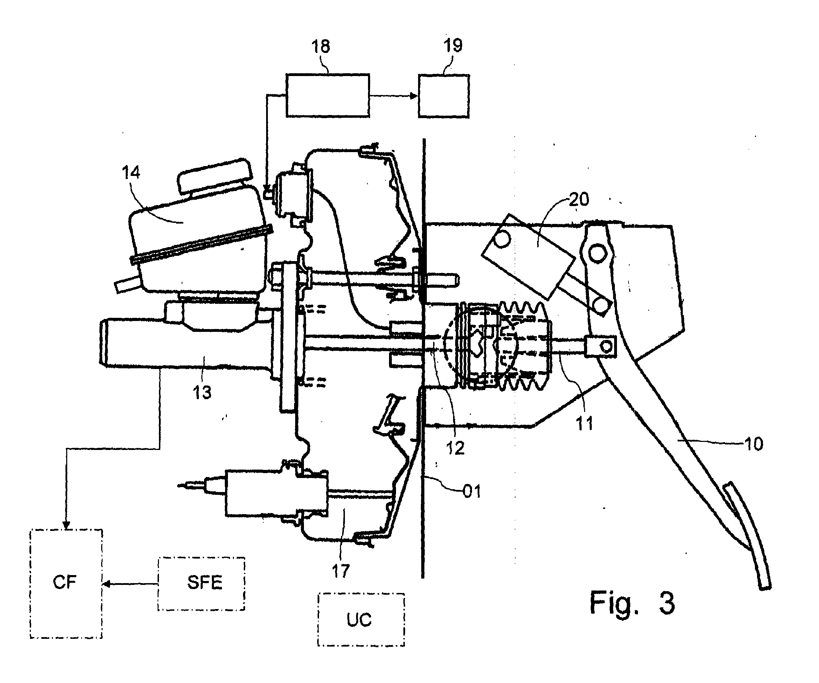

Cependant, le simulateur (référencé 20 sur la figure 3) étant monté en parallèle avec le servofrein, celui-ci absorbe une grande partie de l'effort d'entrée fourni par le conducteur en situation de perte de vide ou de panne électrique. Il en résulte que la pression obtenue au maître-cylindre pour un effort d'entrée donné est grandement diminuée par rapport à un système de freinage classique dans les mêmes conditions.

Le jeu nécessaire au niveau de la tige de commande (estimé à 10mm minimum), provoque une perte de course additionnelle en cas de défaillance de vide, puisque ce jeu doit être comblé afin de pouvoir transmettre l'effort conducteur directement à la tige de poussée. Cette course additionnelle est doublement pénalisante puisqu'elle entraîne non seulement un rallongement de la pédale, mais aussi une compression supplémentaire du simulateur, et donc une perte encore plus importante de l'effort d'entrée non transmis au maître cylindre.

L'invention fournit une solution pour mettre hors service le simulateur en cas défaillance de la source basse pression et/ou du servomoteur d'assistance au freinage.

L'invention concerne donc un système de simulation de sensation de freinage pour installation de freinage de véhicule comprenant un maître cylindre de frein actionné par un servomoteur d'assistance au freinage alimenté en basse pression par une source de basse pression. Ce servomoteur est commandé par une tige de commande elle-même commandée par un organe de commande qui est actionnée par l'énergie musculaire du conducteur et qui permet d'induire une pression de freinage dans un circuit hydraulique de freinage. Le système de freinage selon l'invention comporte une unité hydraulique commandée par l'organe de commande et qui permet de commander hydrauliquement un dispositif simulateur.

Un dispositif de détection permet de détecter une augmentation de la pression de la source de basse pression et/ou dans la chambre basse pression du servomoteur d'assistance au freinage. Selon l'invention, le simulateur comporte en outre un dispositif de relâchement de la pression pouvant exister dans l'unité hydraulique. Ce dispositif de relâchement est commandé par le dispositif de détection lorsque la pression de la source basse pression et/ou de la chambre basse pression du servomoteur dépasse un seuil déterminé.

Selon une forme de réalisation de l'invention, ce système de simulation comporte une vanne de relâchement de pression commandable électriquement permettant de réaliser le relâchement de la pression dans l'unité hydraulique. Le dispositif de détection fournit alors un signal électrique de commande à cette vanne de relâchement lorsque la pression de la source basse pression et/ou de la chambre basse pression du servomoteur dépasse ledit seuil déterminé.

Selon une variante de réalisation, le dispositif de détection détecte la pression dans le circuit de freinage du véhicule ainsi que le déplacement de l'organe de commande et fournit un signal électrique de commande à cette vanne de relâchement lorsque la pression dans le circuit de freinage est inférieure à une valeur déterminée en fonction dudit déplacement de l'organe de commande.

Avantageusement, la vanne de relâchement est normalement ouverte et:
- la vanne de relâchement est fermée lorsque la pédale de frein est actionnée en freinage normal,
- la vanne de relâchement n'est pas fermée lorsque la pédale de frein est actionnée et qu'une défaillance est détectée.

Selon une autre forme de réalisation, le simulateur selon l'invention comporte une vanne de relâchement pneumatique permettant de réaliser le relâchement de la pression dans l'unité hydraulique. Cette vanne possède une entrée qui est reliée à la source basse pression et/ou la chambre basse pression du servomoteur d'assistance au freinage. La pression dans la source basse pression et/ou dans la chambre basse pression du servomoteur commande l'actionnement de cette vanne de relâchement lorsque la pression de la source basse pression et/ou à la chambre basse pression du servomoteur dépasse un seuil déterminé.

De préférence, l'unité hydraulique contient du liquide de frein et ladite vanne de relâchement est reliée au réservoir de liquide de frein pour permettre de conduire le liquide de frein de l'unité hydraulique vers le réservoir lors du relâchement de la pression dans l'unité hydraulique

Selon une forme de réalisation de l'invention, l'unité hydraulique est intégrée au dispositif de simulation. Le système de simulation comporte un piston mobile dans une enceinte contenant du liquide de frein, ledit piston permettant de commander le dispositif de simulation.

Avantageusement, la dite vanne de relâchement est couplée à ladite enceinte et permet de réaliser le relâchement de la pression dans cette enceinte.

Selon une autre forme de réalisation, l'unité hydraulique est reliée par une canalisation à une chambre de commande du dispositif de simulation. Dans ce cas, avantageusement, l'unité hydraulique comporte un piston mobile dans une enceinte contenant du liquide de frein. Ledit piston permet alors de commander un piston de commande du dispositif de simulation.

Selon une variante de réalisation, la dite vanne de relâchement est couplée à ladite enceinte et permet de réaliser le relâchement de la pression dans cette enceinte.

Selon une autre variante de réalisation, la dite vanne de relâchement est couplée à la chambre de commande et permet de réaliser le relâchement de la pression dans la chambre de commande.

Par ailleurs, on pourra prévoir avantageusement que la vanne de relâchement pneumatique comporte une clapet mobile sous l'action d'une différence de pressions entre la pression de la source basse pression et la pression atmosphérique. Une bille mobile permet d'obturer un orifice de sortie de l'unité hydraulique sous l'action dudit clapet mobile.

Les différents objets et caractéristiques de l'invention apparaîtront plus clairement dans la description qui va suivre et dans les figures annexées qui représentent:
- les figures 1 et 2, des courbes de fonctionnement déjà décrites précédemment et concernant un système de freinage mixte électrique/hydraulique,
- la figure 3, un exemple de système de freinage connu dans la technique comportant un système de freinage à énergie auxiliaire et un système de freinage classique à énergie musculaire,
- la figure 4, un exemple de réalisation du système de simulateur selon l'invention applicable au système de freinage de la figure 3,
- la figure 5a, une vue en coupe d'un exemple de réalisation détaillé du système de simulation selon l'invention équipé d'une vanne électromagnétique,
- la figure 5b, une coupe partielle du simulateur de la figure 5a,
- la figure 6a, une vue en coupe d'un exemple de réalisation détaillé du système de simulation selon l'invention équipé d'une vanne pneumatique,
- la figure 6b, une coupe partielle de la vanne pneumatique du simulateur de la figure 6a,
- la figure 7, une variante de réalisation du système de simulateur selon l'invention applicable au système de freinage de la figure 3 dans laquelle le simulateur est commandé par une enceinte hydraulique indépendante qui est commandée par la pédale de frein,
- les figures 8a et 8b, des vues en coupes d'un exemple de réalisation détaillé du système de simulation de la figure 7 selon l'invention équipé d'une vanne électromagnétique,
- la figure 8c, une coupe du simulateur de la figure 8b mettant en évidence la vanne électromagnétique,
- les figures 9a et 9b, des vues en coupes d'un exemple de réalisation détaillé du système de simulation de la figure 7 équipé d'une vanne pneumatique,
- la figure 9c, une coupe de la vanne pneumatique du simulateur des figures 9a et 9b.

En se reportant à la figure 3, on va donc décrire un exemple de système de freinage auquel l'invention peut avantageusement s'appliquer.

A titre d'exemple, ce système sera décrit dans le cadre d'une application à un véhicule à traction mixte possédant un moteur de traction à combustion interne et un ou plusieurs moteurs de traction électriques. Il est connu, dans un tel véhicule d'utiliser les moteurs électriques en génératrices de courant électrique lorsqu'on désire freiner le véhicule. L'énergie électrique fournie sert à recharger les batteries du véhicule. Le véhicule est ainsi freiné par la récupération de l'énergie pour recharger les batteries. Cependant, comme cela a été décrit précédemment, la force de freinage peut n'être pas suffisante en cas de freinage d'urgence, elle est également insuffisante à faible vitesse et, de toutes façons elle dépend de l'état de charge des batteries. C'est pourquoi, Un tel véhicule possède alors généralement, en outre, un système de freinage classique tel qu'un système de freinage hydraulique dont l'effort de freinage résulte au moins partiellement de l'effort exercé par le conducteur sur la pédale de frein.

Le système de freinage normalement utilisé est le système de freinage électrique par récupération d'énergie, puis en cas de besoin, le système de freinage hydraulique est mis en service.

Sur la figure 3, les dispositifs de freinage du véhicule ont été symbolisés par CF. Le système de freinage électrique a été symbolisé par SFE.

Ces systèmes de freinage sont gérés par une unité de commande centrale UC qui décide la mise en fonctionnement du système de freinage hydraulique. Ces systèmes sont connus dans la technique et n'ont donc pas besoin d'être décrits.

Lorsque le système de freinage électrique est utilisé, on prévoit un système de simulation 20 qui oppose un effort au déplacement de la pédale de frein. Cela a pour effet de simuler l'effort de freinage sur la pédale de frein à l'intention du conducteur.

Le système hydraulique de la figure 3 comporte un servomoteur d'assistance au freinage 17 qui est commandé par une tige de commande 11 laquelle est actionnée par l'organe de commande tel que la pédale de frein 10. Le servomoteur 17 commande un maître cylindre de frein 13 à l'aide d'une tige de poussée 12. Le maître cylindre permet d'induire une pression de freinage dans les circuits hydrauliques de freinage vers les freins de roues du véhicule.

De manière connue dans la technique, la chambre basse pression du servomoteur d'assistance au freinage est alimentée en basse pression, par exemple, par une pompe à vide 18. Un dispositif de détection 19 permet de détecter une défaillance de la mise à basse pression de la chambre basse pression du servomoteur d'assistance au freinage.

En cas de défaillance de la mise en basse pression de la chambre basse pression du servomoteur d'assistance au freinage, le système prévoit que la tige de poussée 12 qui actionne le maître cylindre peut être poussée par la tige de commande 11 sous l'effet de l'actionnement de la pédale de frein par le conducteur. Celui-ci doit alors exercer un effort qui correspond à l'importance du freinage qu'il désire obtenir.

Cependant, le simulateur 20 s'oppose au mouvement de la pédale de frein et accroît l'effort fourni par le conducteur ce qui accroît les difficultés de freinage pour le conducteur.

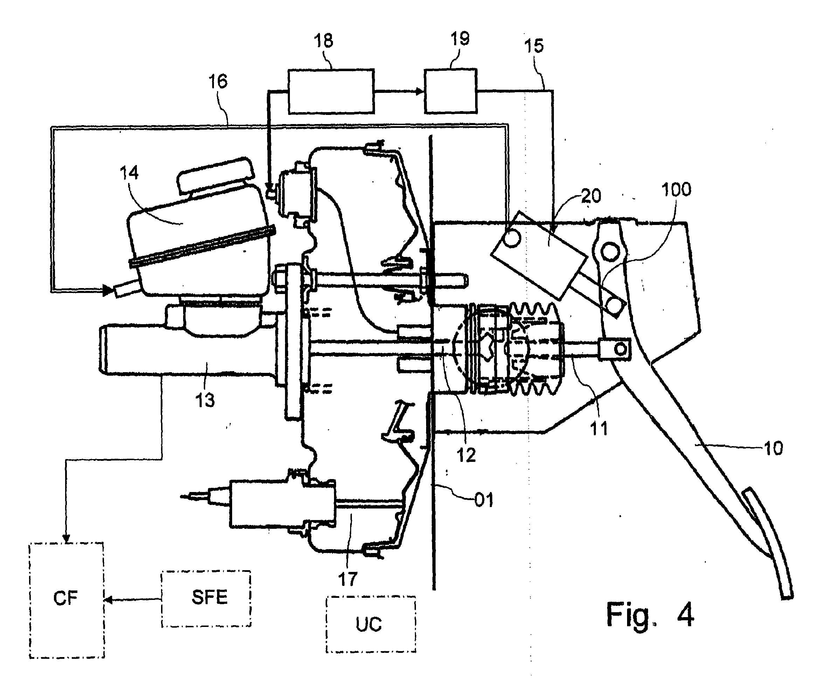

Le système de la figure 4 permet de résoudre ce problème.

Le système de freinage de la figure 4 est similaire à celui de la figure 3. Il possède en plus un système de relâchement de la pression dans la commande hydraulique du simulateur 20. Pour cela, une canalisation 16 relie la chambre de commande hydraulique du simulateur au réservoir de liquide de frein 14.

En cas de défaillance de la source basse pression 18 et/ou du servomoteur d'assistance au freinage, la défaillance est détecté par tout système de détection connu dans la technique.

Cela peut être par exemple un système détection de la pression dans la chambre basse pression du servomoteur ou dans la source basse pression 18.

Cela peut être également un système de détection qui fournit un signal électrique en fonction de la pression dans les circuits de freinage du véhicule et du déplacement de la pédale de frein.

En cas de détection d'une défaillance de la basse pression, le dispositif de détection de pression 19 transmet une commande par la liaison 15 au simulateur 20. En réponse le simulateur ouvre une vanne de relâchement de pression qui connecte la chambre de commande hydraulique du simulateur au réservoir de liquide de frein 14.

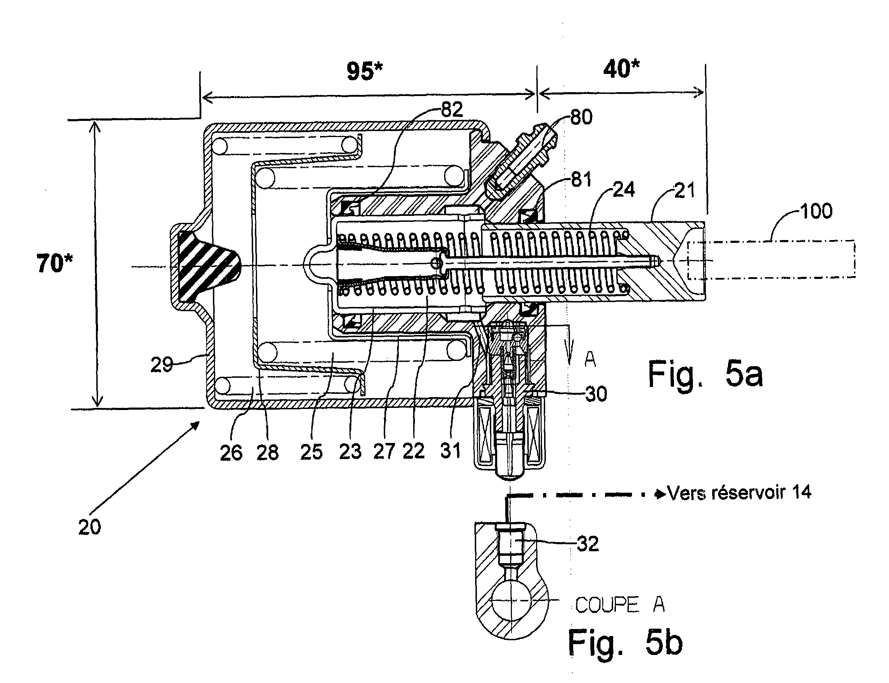

Les figures 5a et 5b représentent un exemple de réalisation du simulateur de la figure 4 dans lequel la vanne de relâchement est une vanne électromagnétique.

Le simulateur comporte un piston 21 qui coulisse dans une enceinte 22. Celle-ci est remplie d'un fluide qui est en l'occurrence du liquide de frein. Lorsque le conducteur appuie sur la pédale de frein, il actionne la tige 100 qui pousse sur le piston 21 vers la gauche de la figure. Par l'intermédiaire du fluide de l'enceinte 22, le piston 23 se déplace vers la gauche et appuie sur le ressort 25 par l'intermédiaire du capot 27. Lorsque le conducteur continue à enfoncer la pédale de frein, l'ensemble "piston 23 - capot 27 - ressort 25" appuie sur le ressort 26 par l'intermédiaire du capot 28. Les ressorts 25 et 26 opposent ainsi une résistance au déplacement de la pédale de frein et simulent un effort de freinage à l'intention du conducteur.

En cas de défaillance de la mise sous vide de la chambre basse pression du servomoteur d'assistance au freinage, l'invention prévoit donc une vanne 30 qui est commandée par un signal électrique fourni par le dispositif de détection 19 de la figure 4. La vanne 30 s'ouvre et met en communication l'enceinte 22 avec la canalisation 16, vers le réservoir 14 (figure 4) par le trou de communication 31 prévu entre l'enceinte 22 et la vanne 30 et par le trou de sortie 32 de la vanne (figure 5b). L'effort de poussée de la tige 100 provoque le déplacement du piston 21 dans l'enceinte 22. Le ressort 24 est faiblement chargé. Il a simplement pour rôle de repousser le piston 21 en position de repos. Le déplacement de la tige 100 n'est donc plus retransmis aux ressorts 25 et 26. Ceux-ci n'opposent donc plus de résistance au déplacement de la pédale de frein.

Selon une variante de réalisation avantageuse, la vanne 30 est normalement ouverte afin que toute situation de défaillance permette au liquide de s'écouler vers le réservoir. Lorsque la pédale de frein est actionnée en freinage normal (détection par capteur de position pédale), la valve 30 se ferme pour isoler l'enceinte 22 de la canalisation 16. Après le relâchement de la pédale de frein, la valve 30 s'ouvre à nouveau.

Lorsqu'une défaillance est détectée, la valve 30 reste ouverte même si la pédale de frein transmet un ordre de freinage, assurant ainsi la fuite du liquide de l'enceinte 22 vers le réservoir.

On notera que le simulateur de la figure 5a comporte avantageusement un dispositif de purge 80.

Le simulateur est par ailleurs équipé avantageusement de joints d'étanchéité tels que 81 et 82 qui assurent une étanchéité de l'enceinte 22.

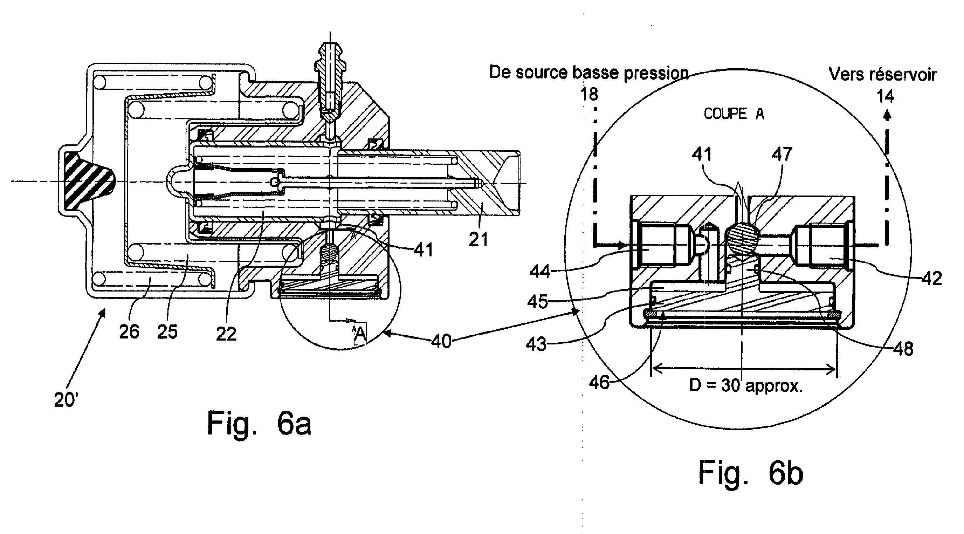

Les figures 6a et 6b représentent un exemple de réalisation d'un simulateur dans lequel la vanne permettant de réaliser un relâchement de la pression dans l'enceinte de commande de ce simulateur est une vanne pneumatique.

Le simulateur en lui-même constitué de façon similaire au simulateur de la figure 5a avec son piston de commande 21 qui coulisse dans l'enceinte 22 et avec ses ressorts de simulation 25 et 26.

L'enceinte 22 est remplie de liquide de frein et possède un orifice de sortie 41.

Le trou de sortie 41 est normalement maintenu fermé par une valve 40 (voir figure 6b).

La valve 40 comporte un clapet 43 qui coulisse de manière étanche dans une enceinte 45. L'enceinte 45 est reliée par son entrée 44 à la source basse pression dont on veut détecter toute défaillance.

La surface extérieure 46 du clapet 43 est à la pression atmosphérique. La pression sur la face 46 est donc normalement nettement supérieure à la pression dans l'enceinte 45. Le clapet 43 appuie donc par son extrémité 48 sur un joint de fermeture tel que la bille 47 pour boucher l'orifice de sortie 41.

Si la pression de la source basse pression augmente la différence de pressions entre la pression dans l'enceinte 45 et la pression sur la face 46 diminue. A partir d'un seuil déterminé, cette différence de pression n'est pas suffisante pour que la bille 47 soit maintenue plaquée contre l'orifice de sortie 41.

Le fluide contenu dans l'enceinte 22 peut alors s'écouler vers le réservoir 14 par l'orifice de sortie 41 et la sortie 42.

Comme précédemment, le piston 21 peut se déplacer dans l'enceinte 22 sans agir sur les ressorts de simulation et le conducteur n'a plus à vaincre les efforts que les ressorts 25 et 26 opposaient au déplacement du piston 21.

On va maintenant décrire une variante de réalisation su système de l'invention dans laquelle le simulateur est commandé par un piston hydraulique indépendant.

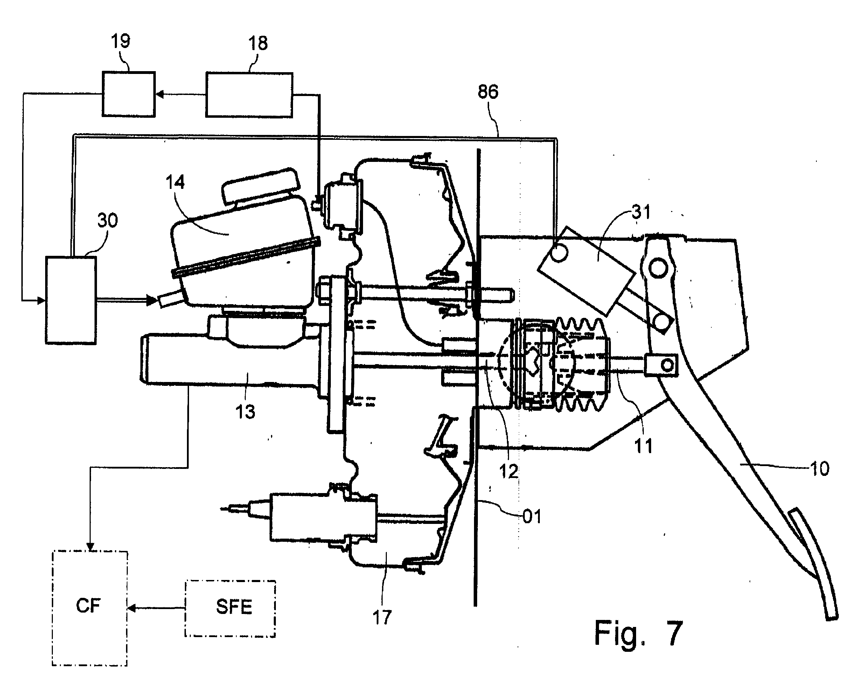

La figure 7 représente un tel système

On retrouve sur cette figure la pédale de frein 10, le servomoteur d'assistance au freinage 17, le maître cylindre de frein 13 et le réservoir de liquide frein 14.

La pédale de frein 10 permet de commander un actionneur hydraulique 31 qui agit sur une chambre de pression du simulateur 30 par une canalisation 86. Une valve de relâchement de la pression dans cette chambre de pression peut être commandée par le dispositif de détection de pression 18.

Selon une variante de réalisation, cette valve de relâchement peut être commandée par une différence de pression existant dans la source basse pression 19 et la pression atmosphérique.

Selon une autre variante de réalisation cette valve de relâchement peut être associée à l'actionneur hydraulique 31 et commander un relâchement de la pression dans cet actionneur.

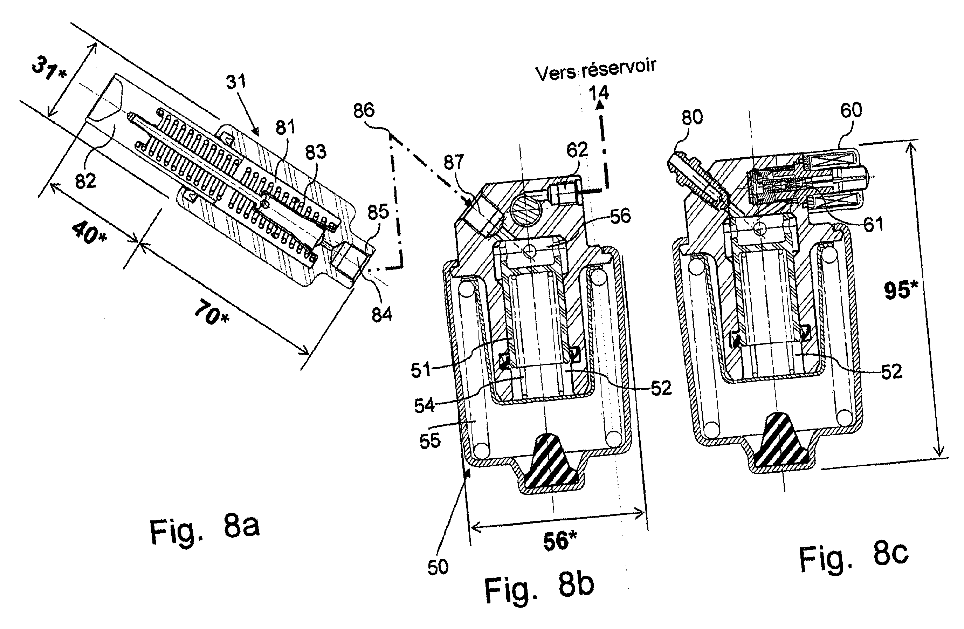

En se reportant aux figures 8a à 8c, on va décrire un exemple de réalisation d'un simulateur comportant une valve électromagnétique.

Le simulateur 50 en lui-même est de constitution similaire au simulateur 20 des figures 5a, 5b, et 6a, 6b. Il possède donc un piston de commande 51 mobile dans une enceinte 52.

L'actionneur 31 est relié par une canalisation 86 à un accès 51 d'une chambre de commande 56 appartenant au simulateur 50.

Selon une variante de réalisation, la sortie 84 de l'actionneur 31 peut être connectée directement à l'entrée 87 du simulateur.

Lorsque le conducteur appuie sur la pédale de frein, il commande le déplacement du piston 82 qui se déplace dans une enceinte 81 remplie de liquide frein. Le piston 82 induit donc une pression dans la chambre de commande 56. Le piston 51 a tendance à se déplacer dans l'enceinte 52. Les ressorts 54 et 55 opposent un effort à ce déplacement et un effort de freinage est simulé vers la pédale de frein à l'intention du conducteur.

Une valve de relâchement 60 (voir figure 8c) est connectée à la chambre de commande 56 par un orifice de sortie 61. Cette vanne de relâchement 60 est une vanne électromagnétique qui permet de connecter l'orifice de sortie 61 à une sortie 62 vers le réservoir de liquide de frein (voir figure 8b).

Cette valve est commandable par un signal électrique fournit par le dispositif de détection 19 (figure 7) en cas de défaillance de la source basse pression.

Le fluide contenu dans l'enceinte 56 peut alors s'écouler vers le réservoir 14 par l'orifice de sortie 61.

Il résulte de cela que le piston 82 de l'actionneur peut se déplacer dans l'enceinte 81 sans transmettre une pression vers la chambre de commande 56 du simulateur 50. L'actionneur 31 n'agit donc plus sur les ressorts de simulation 54 et 55 et le conducteur n'a plus à vaincre les efforts que les ressorts 54 et 55 opposaient au déplacement du piston 82.

Selon une variante de réalisation non représentée sur les figures, la vanne 60 de la figure 8c est reliée par une canalisation à l'enceinte 52 dans laquelle se déplace le piston 51.

Selon une autre variante de réalisation la vanne 60 est reliée à l'enceinte 81 de l'actionneur hydraulique 31.

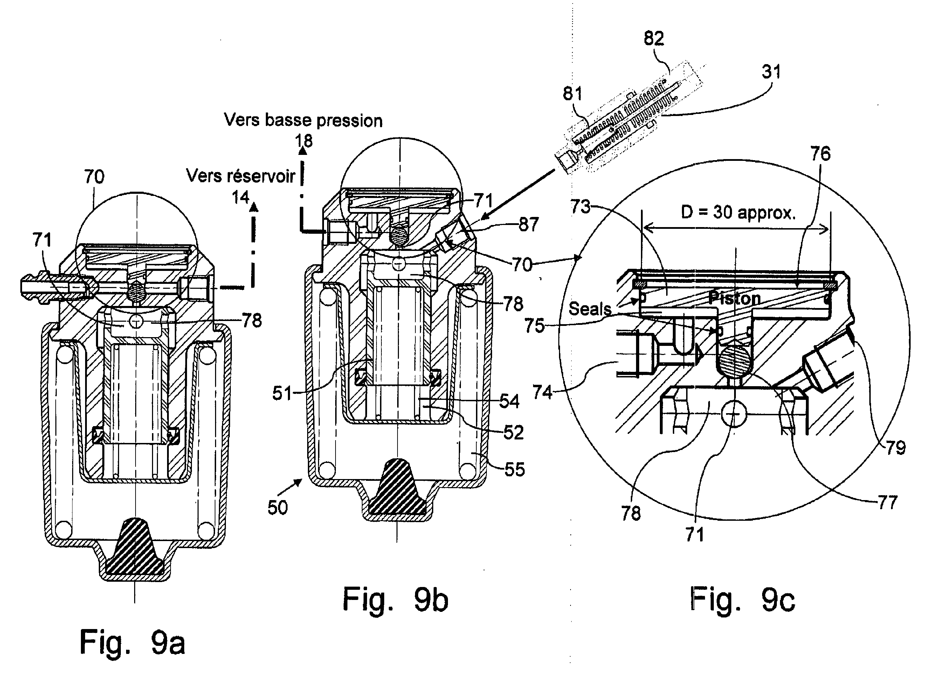

En se référant aux figures 9a à 9c, on va maintenant décrire une forme de réalisation du système de la figure 7 dans laquelle la vanne de relâchement peut être une vanne pneumatique 70 similaire à la vanne pneumatique 40 de la figure 6b.

Comme cela est visible sur les figures 9b et 9c, cette vanne 70 communique avec la chambre de commande 78 par un orifice de sortie 71. La bille 77 obture normalement cet orifice de sortie en raison de la différence pression existant entre la chambre de commande 78 et la face extérieure 76 du clapet 73.

L'accès 74 est relié à la source basse pression.

Lorsque cette basse pression augmente la différence de pressions entre la pression dans l'enceinte 75 et la pression sur la face 76 diminue. A partir d'un seuil déterminé, cette différence de pression n'est pas suffisante pour que la bille 77 soit maintenue plaquée contre l'orifice de sortie 71.

Le fluide contenu dans l'enceinte 78 peut alors s'écouler vers le réservoir 14 par l'orifice de sortie 71 (voir figure 9a). Le piston 82 de l'actionneur peut se déplacer dans l'enceinte 81 sans transmettre une pression vers la chambre de commande 78 du simulateur 70. Le conducteur n'a plus à vaincre les efforts que les ressorts 54 et 55 opposaient au déplacement du piston 51.

Selon une variante de réalisation, la vanne 70 des figures 9a et 9b est reliée par une canalisation à l'enceinte 52 dans laquelle se déplace le piston 51.

Selon une autre variante de réalisation la vanne 70 est reliée à l'enceinte 81 de l'actionneur hydraulique 31.

Dans la description de l'exemple de réalisation qui précède, la vanne de relâchement est commandée par un signal électrique fourni par le dispositif de détection de la basse pression (vanne électromagnétique) ou par une détection de différence de pressions (vanne pneumatique) ou par tout autre détecteur de défaillance de fonctionnement et/ou d'alimentation d'un servomoteur d'assistance au freinage.

Sans sortir de l'invention, on peut également prévoir que la vanne électromagnétique est commandée par un signal électrique fourni par un calculateur qui compare la pression dans le circuit de freinage à la course de la pédale de frein.

Les figures 5b, 8a et 8c comportent des indications de dimensions en millimètres d'un exemple de réalisation avantageux du simulateur et de l'actionneur. Ces dimensions ne sont données qu'à titre d'exemple pour illustrer le faible encombrement de ces dispositifs. C'est ainsi que le simulateur pourra avoir de 50 à 70 millimètres de diamètre et moins de 100 millimètres de hauteur.

L'actionneur 31 pourra avoir 30 millimètres environ de diamètre et aux alentours de 100 millimètre de longueur.

En ce qui concerne le clapet pneumatique 43 de la figure 6b, un diamètre de 30 millimètres pourrait convenir.

En ce qui concerne les implantations, dans le véhicule, des différents dispositifs du système de commande de freinage on peut prévoir par exemple que l'unité hydraulique et le simulateur sont intégrés dans une même unité située au niveau de la pédale de frein.

L'invention prévoit également des implantations du type suivant. Seule l'unité hydraulique est implantée au niveau de la pédale de frein afin de réduire l'encombrement de l'ensemble. Le simulateur et le servomoteur d'assistance au freinage sont intégrés dans une deuxième unité côté compartiment moteur, proche du maître cylindre. L'unité hydraulique et le simulateur sont reliés entre eux par un tuyau hydraulique. Par ailleurs ce tuyau pourrait être du type flexible; Dans ce cas on peut envisager de s'en servir aussi pour restituer une partie de la caractéristique pédale en freinage normal. Ceci permet de simplifier et de réduire l'encombrement de la partie ressort du simulateur, par exemple un ressort pour la partie basse de la courbe (faible pression hydraulique), et la rigidité du flexible pour la partie plus raide du haut de la courbe (haute pression hydraulique).

Afin de réduire l'encombrement de l'ensemble dans le cas de l'option monobloc, les pistons et joints du simulateur peuvent être du type et disposés comme indiqué dans les figures. Il s'agit de pistons plongeurs et de coupelles statiques du type de celles mises en oeuvre dans les maîtres cylindres à coupelles statiques. Le diamètre extérieur de la sortie de l'unité hydraulique est inférieur au diamètre intérieur du piston de simulateur, de manière à permettre au premier de rentrer dans le diamètre du deuxième. Ainsi la longueur de la colonne de liquide ne vient pas se rajouter à la longueur hors toute de l'ensemble.

## Revendications

1. Système de simulation de sensation de freinage pour installation de freinage de véhicule comprenant un maître cylindre de frein (13) actionné par un servomoteur d'assistance au freinage (17) alimenté en basse pression par une source de basse pression (18), ledit servomoteur étant commandé par une tige de commande (11) elle-même commandée par un organe de commande (10) qui est actionnée par l'énergie musculaire du conducteur et permettant d'induire une pression de freinage dans un circuit hydraulique de freinage (CF), ledit système de simulation comportant une unité hydraulique (22, 52, 81) commandée par l'organe de commande (10) et permettant de commander hydrauliquement un dispositif simulateur (20, 30), **caractérisé en ce qu'**il comporte:
- un dispositif de détection (19) permettant de détecter une augmentation de la pression de la source de basse pression (18) et/ou une chambre basse pression du servomoteur d'assistance au freinage (17),
- un dispositif de relâchement (30, 40, 60, 70) de la pression pouvant exister dans l'unité hydraulique (22, 52, 81), ce dispositif de relâchement (30, 40, 60, 70) étant commandé par ledit dispositif de détection (19) lorsque la pression de la source basse pression et/ou de la chambre basse pression du servomoteur dépasse un seuil déterminé.

2. Système de simulation de sensation de freinage selon la revendication 1, **caractérisé en ce qu'**il comporte une vanne de relâchement de pression (30,60) commandable électriquement permettant de réaliser le relâchement de la pression dans l'unité hydraulique (22, 52, 81) et **en ce que** le dispositif de détection (19) fournit un signal électrique de commande à cette vanne de relâchement (30, 60) lorsque la pression de la source basse pression et/ou de la chambre basse pression du servomoteur dépasse ledit seuil déterminé.

3. Système de simulation de sensation de freinage selon la revendication 1, **caractérisé en ce que** qu'il comporte une vanne de relâchement de pression (30, 60) commandable électriquement permettant de réaliser le relâchement de la pression dans l'unité hydraulique (22, 52, 81) et **en ce que** le dispositif de détection (19) détecte la pression dans le circuit de freinage (CF) du véhicule ainsi que le déplacement de l'organe de commande (10, 100), et fournit un signal électrique de commande à cette vanne de relâchement lorsque la pression dans le circuit de freinage est inférieure à une valeur déterminée en fonction dudit déplacement de l'organe de commande.

4. Système de simulation de sensation de freinage selon la revendication 3, **caractérisé en ce que** la vanne de relâchement (30) est normalement ouverte et **en ce que**:
- la vanne de relâchement est fermée lorsque la pédale de frein est actionnée en freinage normal,
- la vanne de relâchement n'est pas fermée lorsque la pédale de frein est actionnée et qu'une défaillance est détectée.

5. Système de simulation de sensation de freinage selon la revendication 1, **caractérisé en ce qu'**il comporte une vanne de relâchement pneumatique (40, 70) permettant de réaliser le relâchement de la pression dans l'unité hydraulique (22, 52, 81), ladite vanne de relâchement (40, 70) possédant une entrée (41, 71) qui est reliée à la source basse pression et/ou à la chambre basse pression du servomoteur d'assistance au freinage, la pression dans la source basse pression et/ou dans la chambre basse pression du servomoteur commandant l'actionnement de cette vanne de relâchement lorsque la pression de la source basse pression et/ou à la chambre basse pression du servomoteur dépasse un seuil déterminé.

6. Système de simulation de sensation de freinage selon l'une quelconque des revendications 2 à 5, **caractérisé en ce que** l'unité hydraulique contient du liquide de frein et **en ce que** ladite vanne de relâchement est reliée au réservoir de liquide de frein (14) pour permettre de conduire le liquide de frein de l'unité hydraulique (22, 52, 81) vers le réservoir lors du relâchement de la pression dans l'unité hydraulique

7. Système de simulation de sensation de freinage selon la revendication 6, **caractérisé en ce que** l'unité hydraulique est intégrée au dispositif de simulation et **en ce qu'**il comporte un piston (21) mobile dans une enceinte (22) contenant du liquide de frein, ledit piston permettant de commander le dispositif de simulation (25, 26).

8. Système de simulation de sensation de freinage selon la revendication 7, **caractérisé en ce que** la dite vanne de relâchement est couplée à ladite enceinte (21) et permet de réaliser le relâchement de la pression dans cette enceinte.

9. Système de simulation de sensation de freinage selon la revendication 6, **caractérisé en ce que** l'unité hydraulique (31) est reliée à une chambre de commande (56, 78) du dispositif de simulation (50), l'unité hydraulique (31) comportant un piston (82) mobile dans une enceinte (81) contenant du liquide de frein, ledit piston permettant de commander un piston de commande (51) du dispositif de simulation.

10. Système de simulation de sensation de freinage selon la revendication 9, **caractérisé en ce que** la dite vanne de relâchement est couplée à ladite enceinte (81) et permet de réaliser le relâchement de la pression dans cette enceinte.

11. Système de simulation de sensation de freinage selon la revendication 9, la dite vanne de relâchement est couplée à la chambre de commande (56, 78) du dispositif de simulation et permet de réaliser le relâchement de la pression dans cette chambre de commande.

12. Système de simulation de sensation de freinage selon la revendication 5, **caractérisé en ce que** la vanne pneumatique comporte un clapet (43, 73) mobile sous l'action d'une différence de pressions entre la pression de la source basse pression et la pression atmosphérique ainsi qu'une bille mobile (47, 77) permettant d'obturer un orifice de sortie (41, 71) de l'unité hydraulique sous l'action de dudit clapet mobile (43, 73).

## Claims

1. System for simulating brake feel for a vehicle brake system, comprising a brake master cylinder (13) actuated by a brake servo motor (17) supplied with low pressure by a low pressure source (18), said servo motor being controlled by a control rod (11), which in turn is controlled by a control element (10) actuated by the driver's muscular energy, and enabling a braking pressure to be induced in a hydraulic brake circuit (CF), said simulation system including a hydraulic unit (22, 52, 81) which is controlled by the control element (10) and which enables a simulation device (20, 30) to be controlled hydraulically, **characterized in that** it includes:
- a detection device (19) for detecting an increase in the pressure of the low pressure source (18), and/or of a low pressure chamber of the brake servo motor (17),
- a pressure relief device (30, 40, 60, 70) which may be located in the hydraulic unit (22, 52, 81), which pressure relief device (30, 40, 60, 70) is actuated by said detection device (19) when the pressure of the low pressure source and/or of the low pressure chamber of the servo motor exceeds a determinate threshold.

2. System for simulating brake feel according to Claim 1, **characterized in that** it includes an electrically controllable pressure relief valve (30, 60) which enables the pressure in the hydraulic unit (22, 52, 81) to be relieved, and **in that** the detection device (19) supplies an electrical control signal to said relief valve (30, 60) when the pressure of the low pressure source and/or of the low pressure chamber of the servo motor exceeds said determinate threshold.

3. System for simulating brake feel according to Claim 1, **characterized in that** it includes an electrically controllable pressure relief valve (30, 60) which enables the pressure in the hydraulic unit (22, 52, 81) to be relieved, and **in that** the detection device (19) detects the pressure in the brake circuit (CF) of the vehicle and the displacement of the control element (10, 100), and supplies an electrical control signal to said relief valve when the pressure in the brake circuit is below a determinate value as a function of said displacement of the control element.

4. System for simulating brake feel according to Claim 3, **characterized in that** the relief valve (30) is normally open and **in that**:
- the relief valve is closed when the brake pedal is operated in normal braking,
- the relief valve is not closed when the brake pedal is operated and a malfunction is detected.

5. System for simulating brake feel according to Claim 1, **characterized in that** it includes a pneumatic relief valve (40, 70) which enables the pressure in the hydraulic unit (22, 52, 81) to be relieved, said relief valve (40, 70) having an inlet (41, 71) which is connected to the low pressure source and/or to the low pressure chamber of the brake servo motor, the pressure in the low pressure source and/or in the low pressure chamber of the servo motor causing the actuation of said relief valve when the pressure of the low pressure source and/or in the low pressure chamber of the servo motor exceeds a determinate threshold.

6. System for simulating brake feel according to any one of Claims 2 to 5, **characterized in that** the hydraulic unit contains brake fluid and **in that** said relief valve is connected to the brake fluid reservoir (14) in order to enable the brake fluid of the hydraulic unit (22, 52, 81) to be directed to the reservoir when the pressure in the hydraulic unit is relieved.

7. System for simulating brake feel according to Claim 6, **characterized in that** the hydraulic unit is integrated in the simulation device and **in that** it includes a piston (21) which is movable in a chamber (22) containing brake fluid, said piston enabling the simulation device (25, 26) to be controlled.

8. System for simulating brake feel according to Claim 7, **characterized in that** said relief valve is coupled to said chamber (21) and enables the pressure in said chamber to be relieved.

9. System for simulating brake feel according to Claim 6, **characterized in that** the hydraulic unit (31) is connected to a control chamber (56, 78) of the simulation device (50), the hydraulic unit (31) including a piston (82) which is movable in a chamber (81) containing brake fluid, said piston enabling a control piston (51) of the simulation device to be controlled.

10. System for simulating brake feel according to Claim 9, **characterized in that** said relief valve is coupled to said chamber (81) and allows the pressure in this chamber to be relieved.

11. System for simulating brake feel according to Claim 9, **characterized in that** said relief valve is coupled to the control chamber (56, 78) of the simulation device and enables the pressure in this control chamber to be relieved.

12. System for simulating brake feel according to Claim 5, **characterized in that** the pneumatic valve includes a stopper (43, 73) which is movable under the influence of a pressure difference between the pressure of the low pressure source and atmospheric pressure, and includes a movable ball (47, 77) which enables the outlet orifice (41, 71) of the hydraulic unit to be occluded under the influence of said movable stopper (43, 73).

## Patentansprüche

1. System zur Bremsgefühlsimulation für eine Fahrzeugbremsanlage mit einem Hauptbremszylinder (13), der von einem Servomotor (17) zur Bremsunterstützung betätigt wird, welcher von einer Niederdruckquelle (18) mit Niederdruck gespeist wird, wobei der Servomotor von einer Steuerstange (11) gesteuert wird, die selbst von einem Steuerorgan (10) gesteuert wird, das durch die Muskelenergie des Fahrers betätigt wird und es ermöglicht, einen Bremsdruck in einen hydraulischen Bremskreis (CF) einzuleiten, wobei das Simulationssystem eine Hydraulikeinheit (22, 52, 81) aufweist, die von dem Steuerorgan (10) gesteuert wird und die hydraulische Steuerung einer Simulatorvorrichtung (20, 30) ermöglicht, **dadurch gekennzeichnet, dass** es Folgendes aufweist:
- eine Erfassungsvorrichtung (19), mit der ein Anstieg des Drucks der Niederdruckquelle (18) und/oder einer Niederdruckkammer des Servomotors (17) zur Bremsunterstützung erfasst werden kann,
- eine Vorrichtung (30, 40, 60, 70) zum Reduzieren des Drucks, der in der Hydraulikeinheit (22, 52, 81) herrschen kann, wobei diese Reduziervorrichtung (30, 40, 60, 70) von der Erfassungsvorrichtung (19) gesteuert wird, wenn der Druck der Niederdruckquelle und/oder der Niederdruckkammer des Servomotors einen vorbestimmten Schwellenwert überschreitet.

2. System zur Bremsgefühlsimulation nach Anspruch 1, **dadurch gekennzeichnet, dass** es ein elektrisch steuerbares Druckreduzierventil (30, 60) aufweist, mit dem die Reduzierung des Drucks in der Hydraulikeinheit (22, 52, 81) realisiert werden kann, und die Erfassungsvorrichtung (19) ein elektrisches Steuersignal an dieses Reduzierventil (30, 60) abgibt, wenn der Druck der Niederdruckquelle und/oder der Niederdruckkammer des Servomotors den vorbestimmten Schwellenwert überschreitet.

3. System zur Bremsgefühlsimulation nach Anspruch 1, **dadurch gekennzeichnet, dass** es ein elektrisch steuerbares Druckreduzierventil (30, 60) aufweist, mit dem die Reduzierung des Drucks in der Hydraulikeinheit (22, 52, 81) realisiert werden kann, und die Erfassungsvorrichtung (19) den Druck im Bremskreis (CF) des Fahrzeugs sowie die Verlagerung des Steuerorgans (10, 100) erfasst und in Abhängigkeit von der Verlagerung des Steuerorgans ein elektrisches Steuersignal an dieses Reduzierventil abgibt, wenn der Druck im Bremskreis unter einem vorbestimmten Wert liegt.

4. System zur Bremsgefühlsimulation nach Anspruch 3, **dadurch gekennzeichnet, dass** das Reduzierventil (30) normalerweise geöffnet ist und
- das Reduzierventil geschlossen ist, wenn das Bremspedal für eine Normalbremsung betätigt wird,
- das Reduzierventil nicht geschlossen ist, wenn das Bremspedal betätigt und ein Ausfall erfasst wird.

5. System zur Bremsgefühlsimulation nach Anspruch 1, **dadurch gekennzeichnet, dass** es ein pneumatisches Reduzierventil (40, 70) aufweist, mit dem die Reduzierung des Drucks in der Hydraulikeinheit (22, 52, 81) realisiert werden kann, wobei das Reduzierventil (40, 70) einen Eingang (41, 71) aufweist, der mit der Niederdruckquelle und/oder der Niederdruckkammer des Servomotors zur Bremsunterstützung verbunden ist, wobei der Druck in der Niederdruckquelle und/oder in der Niederdruckkammer des Servomotors die Betätigung dieses Reduzierventils steuert, wenn der Druck der Niederdruckquelle und/oder der Niederdruckkammer des Servomotors einen vorbestimmten Schwellenwert überschreitet.

6. System zur Bremsgefühlsimulation nach einem der Ansprüche 2 bis 5, **dadurch gekennzeichnet, dass** die Hydraulikeinheit Bremsflüssigkeit enthält und das Reduzierventil mit dem Bremsflüssigkeitsbehälter (14) verbunden ist, so dass die Bremsflüssigkeit der Hydraulikeinheit (22, 52, 81) bei der Reduzierung des Drucks in der Hydraulikeinheit zum Behälter geleitet werden kann.

7. System zur Bremsgefühlsimulation nach Anspruch 6, **dadurch gekennzeichnet, dass** die Hydraulikeinheit in der Simulationsvorrichtung integriert ist und diese einen Kolben (21) aufweist, der in einem Raum (22) beweglich ist, der Bremsflüssigkeit enthält, wobei der Kolben die Steuerung der Simulationsvorrichtung (25, 26) ermöglicht.

8. System zur Bremsgefühlsimulation nach Anspruch 7, **dadurch gekennzeichnet, dass** das Reduzierventil mit dem Raum (22) verbunden ist und es ermöglicht, die Reduzierung des Drucks in diesem Raum zu realisieren.

9. System zur Bremsgefühlsimulation nach Anspruch 6, **dadurch gekennzeichnet, dass** die Hydraulikeinheit (31) mit einer Steuerkammer (56, 78) der Simulationsvorrichtung (50) verbunden ist, wobei die Hydraulikeinheit (31) einen Kolben (82) aufweist, der in einem Raum (81) beweglich ist, der Bremsflüssigkeit enthält, wobei der Kolben die Steuerung eines Steuerkolbens (51) der Simulationsvorrichtung ermöglicht.

10. System zur Bremsgefühlsimulation nach Anspruch 9, **dadurch gekennzeichnet, dass** das Reduzierventil mit dem Raum (81) verbunden ist und es ermöglicht, die Reduzierung des Drucks in diesem Raum zu realisieren.

11. System zur Bremsgefühlsimulation nach Anspruch 9, **dadurch gekennzeichnet, dass** das Reduzierventil mit der Steuerkammer (56, 78) der Simulationsvorrichtung verbunden ist und es ermöglicht, die Reduzierung des Drucks in dieser Steuerkammer zu realisieren.

12. System zur Bremsgefühlsimulation nach Anspruch 5, **dadurch gekennzeichnet, dass** das pneumatische Ventil ein Ventilelement (43, 73) aufweist, das unter der Wirkung einer Druckdifferenz zwischen dem Druck der Niederdruckquelle und dem atmosphärischem Druck beweglich ist, und eine bewegliche Kugel (47, 77), mit der eine Ausgangsöffnung (41, 71) der Hydraulikeinheit unter der Wirkung des beweglichen Ventilelements (43, 73) geschlossen werden kann.
